# EUROPÄISCHE PATENTANMELDUNG

(11) **EP 3 542 893 A1**
(43) Veröffentlichungstag der Anmeldung: **25.09.2019**
(21) Anmeldenummer: 18163501.2
(22) Anmeldetag: 23.03.2018
(51) Int. Cl.: B01J 2/16, C05C 9/00

(54) **FLIESSBETTGRANULATOR ODER FLIESSBETTKÜHLER MIT BESCHICHTETER PERFORIERTER PLATTE**

(71) Anmelder: thyssenkrupp Fertilizer Technology GmbH, 44141 Dortmund (DE); thyssenkrupp AG, 45143 Essen (DE)
(72) Erfinder: Potthoff, Dr. Matthias, 44265 Dortmund (DE); Grulke, Andreas, 45259 Essen (DE); Franzrahe, Dr. Harald, 44289 Dortmund (DE)
(74) Vertreter: thyssenkrupp Intellectual Property GmbH

(57) **Zusammenfassung**

Die Erfindung umfasst einen Fließbettgranulator zur Granulierung harnstoffhaltiger Stoffe, bevorzugt mindestens umfassend einen Granulatorraum (1), eine in dem Granulatorraum (1) angeordnete perforierte Plate (2), in, auf oder getrennt von der perforierten Platte (2) angeordnete Sprühdüsen (3), mit den Sprühdüsen (3) verbundene Atomisierungsgaszuleitungen (4) und Schmelzezuführungsleitungen (10), eine Fluidisierungsgaszuleitung (5), Saatkeimzuführung (7), Granulatorauslauf (9) und Entlüftungsöffnung (8) dadurch gekennzeichnet, dass die perforierte Platte (2) eine anti-haft Beschichtung (6) aufweist. Eine erfindungsgemäße Fließbettgranulationsanlage ist ein weiterer Gegenstand der Erfindung.

## Beschreibung

Die Erfindung betrifft einen Fließbettgranulator und/oder Fließbettkühler mit einer erfindungsgemäß beschichteten perforierten Platte, eine Fließbettgranulationsanlage und die Verwendung des erfindungsgemäßen Fließbettgranulator und/oder Fließbettkühlers zur Herstellung eines harnstoffhaltigen oder harnstoff-/schwefelhaltigen Düngergranulats.

Im Hinblick auf das weltweite Bevölkerungswachstum kommt der Entwicklung von flexiblen und effizienten Düngern eine große und wachsende Bedeutung zu. Dabei spielt nicht nur der Dünger selbst, d.h. die chemische Zusammensetzung, sondern auch die Verarbeitungen in transportfähige Gebinde und die Ausbringung auf das Feld eine Rolle. Die größte Bedeutung kommt hierbei sicherlich der Granulierung zu gleichmäßigen, in Größe und Beschaffenheit gleichen Partikeln, zu. Wichtige Parameter sind hierbei geringe Staubbildung, Festigkeit, niedrige Aggregationstendenz, homogene Größe, Lagerfähigkeit und Beständigkeit. Eine etablierte Granulationstechnik ist die Fließbettgranulation, welche gegenüber beispielsweise den Prill- und Pastilliertechniken, verbesserte Partikeleigenschaften aufweist.

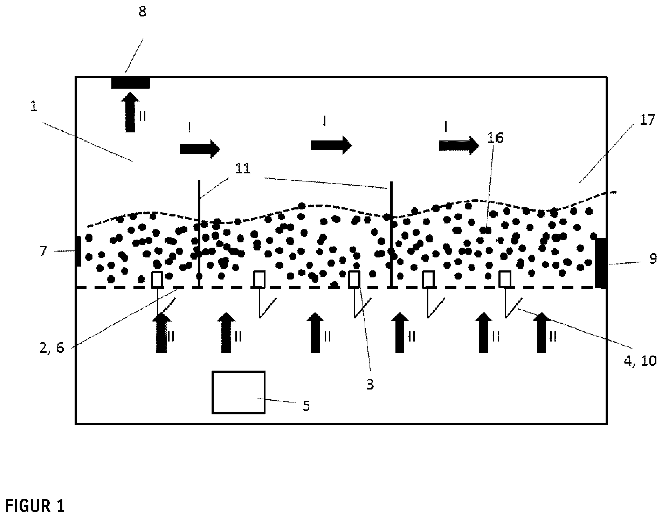

Ein Beispiel zur Herstellung eines Harnstoffhaltigen Düngergranulates mittels Fließbett Granulation findet sich in der WO 2010/060535 A1, z.B. in den Paragraphen [0025]-[0035], Figur 1 oder der US 4,701,353 A, DE 31 16 778 A1 und US 4,219,589 A.

Einen sehr großen Anteil an der weltweiten Düngerproduktion entfällt auf harnstoffhaltige Dünger. Dieser wasserlösliche Dünger zerfällt im Boden zu Ammoniumsalzen bzw. Nitraten und stellt einen wichtigen Basisdünger dar. Dieser harnstoffhaltige Dünger kann mit weiteren Elementen wie Kalium, Phosphaten oder Schwefelverbindungen kombiniert werden.

Der Einsatz von Harnstoff-Schwefel Dünger in der Landwirtschaft ist schon seit längerer Zeit bekannt. In derartigen Düngermischungen können der Pflanze die beiden Elemente Stickstoff und Schwefel gleichzeitig bereitgestellt werden, so dass Schritte und Kosten zur Ausbringung eines weiteren Düngers eingespart werden können. In Kombination mit Harnstoff ermöglicht dies beispielsweise eine Versorgung der ausgesäten Pflanzen im frühen Stadium mit Stickstoff über den Harnstoff und mit Schwefel in den anschließenden Wachstumsphasen.

Aus diesem Grund kommen Harnstoff-Schwefeldüngern mit einer homogenen Verteilung von Harnstoff und Schwefel eine zunehmend größere Bedeutung zu. Beispiele finden sich z.B. in der US 4,330,319 A.

Um eine gute Löslichkeit der stickstoffhaltigen Salze oder eine gute biologische Abbaubarkeit des elementaren Schwefels im Boden zu gewährleisten, sind möglichst kleine Partikel notwendig. Diese kleinen Partikel weisen im Gegensatz zu größeren Partikeln eine im Verhältnis zum Volumen größere Oberfläche auf. Diese größere Oberfläche, insbesondere die größere spezifische Oberfläche (beispielswiese bestimmbar nach der BET-Methode, z.B. nach DIN-ISO 9277) verbessert die Zugänglichkeit der stickstoffhaltigen Salze oder des elementaren Schwefels für die Pflanze beziehungsweisefür die im Boden befindliche Mikroorganismen.

Die im Fließbettgranulator gebildeten Partikel weisen üblicherweise Temperaturen um etwa 100 °C auf. Zudem sind die neu gebildeten Teilchen in der Regel in diesem Temperaturbereich noch recht weich. Mit diesen voranstehenden Eigenschaften ist auch eine gewisse Neigung zur Anhaftung an Oberflächen verbunden. Diese Anhaftung an der Granulatoroberfläche kann zudem als Ausgangspunkt für die unerwünschte Bildung von größeren Partikelagglomeraten dienen. Erreichen diese eine entsprechende Größe, so können diese an der Wachstumsstelle oder als abgebrochene Brocken im Granulatorraum störend auf den Granulationsprozess wirken. Diese Anhaftung kann die gesamte Granulatorinnenfläche betreffen, häufig variiert diese je nach der betroffenen Oberfläche im Fließbettgranulator.

Ein möglicher Lösungsansatz zur Vermeidung der Anhaftung an den Granulatoroberflächen stellt beispielsweise die Beschichtung der relevanten Oberflächen dar.

GB 1,395,906 A offenbart eine Prillvorrichtung welche eine Substratabweisende Beschichtung auf organischer oder anorganischer Basis beinhaltet. Die Beschichtung kann auf den Prilldüsen oder der Verteilerplatte angebracht sein.

DD 118 287 offenbart Beschichtungen für die Innenwände von Reaktoren zur Polymerisation von Vinylpolymeren.

Die EP 2 832 439 A1 offenbart Granulationsreaktoren, welche eine Beschichtung auf Basis von organischen Siliziumverbindungen aufweisen.

Insbesondere in der EP 2 832 439 A1 wird die großflächige Beschichtung des Granulatorraums offenbart. Die großflächige Beschichtung ist jedoch bei der Größe des Granulatorraums nur schwierig und sehr kostspielig zu realisieren.

Es ist daher Aufgabe der vorliegenden Erfindung, Anhaftungen und die Bildung größerer Partikelaglomerate im Granulatorraum zu vermindern und gleichzeitig nur geringfügige Änderungen im Granulatorraum vorzunehmen.

Diese Aufgabe wird überraschenderweise von einem Fließbettgranulator mit einer beschichteten perforierten Platte gemäß Anspruch 1 gelöst. Vorteilhafte Ausgestaltungen ergeben sich aus den abhängigen Ansprüchen.

Des Weiteren umfasst die Erfindung eine Fließbettgranulationsanlage mit einem erfindungsgemäßen Fließbettgranulator.

In einem weiteren Aspekt beinhaltet die Erfindung die Verwendung des erfindungsgemäßen Fließbettgranulators zur Herstellung eines harnstoffhaltigen oder harnstoff-/schwefelhaltigen Düngergranulats.

Der erfindungsgemäße Fließbettgranulator umfasst eine im Fließbettgranulator angeordnete perforierte Platte, welche eine anti-haft Beschichtung, beispielsweise organische Siliziumverbindungen oder fluorirte Kohlenwasserstoffe, beispielsweise Polytetrafluorethylen, aufweist. Die perforierte Platte kann verschiedentlich ausgeführt sein und bildet die "Bodenplatte" für das Granulationsmedium. Das Fluidisierungsmedium, beispielsweise Luft wird durch die perforierte Platte in das Granulationsmedium eingeleitet. Aufgrund der im Fließbettgranulator vorliegenden Strömungsverhältnissen und der Schwerkraft, können sich Granulatpartikel oder Partikelstaub auch im Bereich der perforierten Platte ansammeln. Diese Granulatpartikel können sich auf der perforierten Platte festsetzen und zu einer Verstopfung der Öffnungen der perforierten Platte führen. Diese Verstopfungen können wiederum zu einer Veränderung der Temperierung des Fließbettes führen. Fallen einzelne Teile der Öffnungen der perforierten Platte aus, wird gleichzeitig die Intensität des fluiden Mediums aus gebildeten Granulatpartikel verändert. Möglich sind hier Strömungs- und Temperaturinhomogenitäten im fluiden Medium. Dies kann dann zu einer größeren Granulatpartikelinhomogenität, insbesondere der Granulatpartikelgrößenverteilung führen. Schreitet der beschriebene Zustand voran, muss der Granulationsprozess abgestellt und eine aufwändige Reinigung der perforierten Platte erfolgen. Gleichzeitig wirken auf die perforierte Platte durch die im Fließbett auftretenden Strömungen und Verwirbelungen, welche mit einer dauerhaften Beaufschlagung oder "Beschuss" der perforierten Platte durch Granulatpartikel einhergehen, große Kräfte auf die Oberfläche der perforierten Platte. Überraschenderweise hat sich gezeigt, dass eine anti-haft Beschichtung, bevorzugt organische Siliziumverbindungen enthaltende Beschichtung, gegenüber den voranstehend beschriebenen Kräften beständig ist. Zudem hat sich überraschenderweise gezeigt, dass eine selektive Beschichtung der perforierten Platte die oben beschriebenen Nachteile deutlich minimiert, ohne eine aufwändige und teure Beschichtung des gesamten Fließbettgranulatorraums vornehmen zu müssen.

Der erfindungsgemäße Fließbettgranulator umfasst bevorzugt mindestens einen Granulatorraum. Innerhalb des Granulatorraums ist eine perforierte Plate mit bevorzugt in oder auf der perforierten Platte angeordneten Sprühdüsen angebracht. Alternativ können die Sprühdüsen auch getrennt von der perforierten Platte, beispielsweise oberhalb der perforierten oder seitlich im Granulatorraum angeordnet sein. Die Sprühdüsen sind mit Atomisierungsgaszuleitungen und Schmelzezuführungsleitungen verbunden. Der Ausdruck "Atomisierungsgaszuleitung" umfasst im Sinne der Erfindung Gaszuleitungen, welche zusammen mit der zu granulierenden Schmelze aus den Schmelzezuführungsleitungen mit Hilfe der Sprühdüsen fein verteilte Schmelzetröpfchen ("atomisierte" Tröpfchen) erzeugen. Der Ausdruck "Atomisierung" meint im Sinne der Erfindung nicht der Zerlegung oder Zersetzung der Schmelzetröpfchen in einzelne Atome, sondern vielmehr die Erzeugung von kleinen Schmelzetröpfchen, bevorzugt im Bereich von 1 bis 200 µm.

Der Fließbettgranulator umfasst weiterhin eine Fluidisierungsgaszuleitung. Über die Fluidisierunggaszuleitung wird das Fluidisierungsmedium zur Erzeugung des Fließbetts eingebracht. Ein bevorzugtes Fluidisierungsmedium ist Luft, alternativ sind aber auch beispielsweise inerte Gase wie Stickstoff, Kohlendixoid, Argon oder Gemische davon möglich. Der Fließbettgranulator umfasst zudem eine Saatkeimzuführung, einen Granulatorauslauf und eine oder mehrere Entlüftungsöffnung(en). Die Position der Entlüftungsöffnungen im Fließbettgranulator ist nicht festgelegt, bevorzugt kann die Entlüftungsöffnung benachbart und oberhalb der Saatkeimzuführung angeordnet sein. Der Ausdruck "Saatkeimzuführung" umfasst im Sinne der Erfindung Vorrichtungen oder Leitungen, welche den Fließbettgranulator mit Granulationskeimen versorgen. Die Saatkeimzuführung kann sowohl extern in den Fließbettgranulator über eine Zuleitung (beispielsweise aus einem Brecher oder von Sieben) als auch durch interne Erzeugung innerhalb des Fließbettgranulators ausgeführt sein.

Im Fließbettgranulator ist die perforierte Platte angeordnet, welche die anti-haft Beschichtung, bevorzugt eine organische Siliziumverbindungen enthaltende Beschichtung aufweist.

Bevorzugt umfassen die organischen Siliziumverbindungen Polyalkylsiliziumverbindungen, Polyarylsiliziumverbindungen, Polyallylsiliziumverbindungen, polymere Mischverbindung aus Alkyl-, Aryl- und Allylsiliziumverbindungen, sowie Gemische und Derivate davon. Alternative Beispiele für anorganische Siliziumverbindungen umfassen Siliziumdioxid (SiO₂) oder Siliziumnitride (Si₃N₄). Ein Beispiel zur Beschichtung mit einer organischen Siliziumbeschichtung findet sich in der EP 2 832 439 A1 in Paragraph [0030].

In einer bevorzugten Ausführungsform umfasst die organische Siliziumverbindungen enthaltende Beschichtung der perforierten Platte im Fließbettgranulator Polyalkylsiloxane, Polymethylsiloxane, Polydimethylsiloxane, (poly)Perfluoralkylsilane oder (poly)Perfluoralkylsiloxane, Polymethylphenylsiloxane, besonders bevorzugt Polymethylsiloxane und oder Gemische davon.

In einer weiteren bevorzugten Ausführungsform weist die die organische Siliziumverbindungen enthaltende Beschichtung der perforierten Platte im Fließbettgranulator eine Schichtdicke von 0,5 µm bis 1000 µm, besonders bevorzugt von 15 µm bis 40 µm auf.

Bevorzugt ist die perforierte Platte teilweise oder vollständig mit der organische Siliziumverbindungen enthaltende Beschichtung beschichtet. Besonders bevorzugt ist nur die Seite der perforierten Platte beschichtet, welche mit dem Fließbett in Verbindung steht. Optional ist die Beschichtung unterschiedlich dick auf der perforierten Platte aufgebracht. So kann je nach der zu erwartenden mechanischen Belastung der perforierten Platte, beispielsweise durch die sich bewegenden fluidisierten Granulatpartikel, die Beschichtungsdicke variiert werden.

Die Erfindung umfasst des Weitern eine Fließbettgranulationsanlage zur Herstellung eines Düngergranulates. Die Fließbettgranulationsanlage umfasst mindestens einen Fließbettgranulator, bevorzugt mit einer perforierten Granulatorplatte, Saatkornzuleitung, Fluidisierungsgaszuleitung, eine oder mehrere Entlüftungsöffnungen und Schmelzdüsen mit einer Atomisierungsgaszuleitung. Der Fließbettgranulator weißt in der Regel einen Granulatorraum, die im Granulatorraum angeordnete perforierte Plate und in/auf der perforierten Platte angeordnete erfindungsgemäße Sprühdüsen auf. Die erfindungsgemäßen Sprühdüsen sind bevorzugt mit Zuleitungen für Schmelze aus beispielsweise Harnstoff oder Harnstoff/Schwefel Mischungen sowie einer Zuleitung für das Atomisierungsgas verbunden. Das sich im Granulator befindliche Fließbett steht mit einem fluidisierenden Gasstrom, bevorzugt Luft in Verbindung. Die im Fließbett befindlichen Saatkörner wachsen durch Kontakt mit den im Atomisierungsmedium erzeugten Schmelztröpfchen an. Die fertigen Partikel werden anschließend in einen ersten Fließbettkühler überführt. Der Fließbettkühler weist mindestens einen Kühlerraum mit einer Produkteingangsöffnung, einer Produktausgangsöffnung, einer in dem Kühlerraum angeordneten perforierten Platte und mindestens eine unterhalb der perforierten Platte angeordnete Kühlmediumeintrittsöffnung auf. Des Weiteren kann die Fließbettgranulationsanlage Granulationsbeförderungsmittel, Siebe, Brecher und Produktkühler aufweisen.

Die erfindungsgemäße Fließbettgranulationsanlage ist dadurch gekennzeichnet, dass der Fließbettgranulator, der erste Fließbettkühler und/oder der Produktkühler einen erfindungsgemäßen Aufbau wie voranstehend beschrieben aufweisen.

Die Erfindung umfasst des Weiteren die Verwendung der vorab beschriebenen erfindungsgemäßen Fließbettgranulationsanlage zur Herstellung eines Düngergranulates enthaltend Ammoniumverbindungen, Nitrate, Phosphate, Harnstoff, elementaren Schwefel, Ammoniumsulfat, UAS (Harnstoff-Ammoniumsulfat) und/oder Gemische davon. Besonders bevorzugt wird die vorab beschriebene erfindungsgemäße Fließbettgranulationsanlage zur Herstellung eines harnstoffhaltigen Düngergranulates verwendet.

Im Folgenden wird die Erfindung anhand eines Beispiels näher erläutert. Das Beispiel schränkt die Erfindung in keiner Weise ein. Das Beispiel zeigt die anti-adhäsive Wirkung der organische Siliziumverbindungen enthaltenden Beschichtung.

### Beispiel:

Metallische Werkstücke (Granulatorrückwand/DIN A4) wurde je zur Hälfte mit drei verschiedenen Beschichtungen auf Basis von Siliziumdioxid (SiO₂), einen Perfluoralkylsilan und einem Polymethylsiloxan beschichtet. Die ausgehärteten Beschichtungen wurden dem im Granulatorbetrieb (gemittelt über 19, 20 und 17 Tage) herrschenden Bedingungen und Medien ausgesetzt und die qualitative Harnstoffbeaufschlagung ermittelt. Keine oder nur sehr geringfügige Anhaftung, d.h. starke Harnstoff Abstoßung (anti-adhäsion) wurde mit (++), starke Anhaftung und geringe Abstoßung mit (-), und eine mittlere Abstoßung mit (O) im Vergleich zur unbeschichteten Hälfte des Werkstücks beurteilt. Die Ergebnisse finden sich in der folgenden Tabelle:

**Tabelle 1:**

| Beschichtung | Qualitative Harnstoff Abstoßung |
|---|---|
| Silicon dioxid | 0 |
| Perfluoroalkylsilan | - |
| Polymethylsiloxan | ++ |

Aus Tabelle 1 ergibt sich, dass eine anorganische Beschichtung auf Basis von Siliziumdioxid nur schlechte Abstoßungsneigung gegenüber Harnstoff zeigt. Überraschenderweise zeigen Polymethylsioxane, auch im Vergleich zu Perfluoroalkylsilanen, die beste Abstoßungsneigung gegenüber Harnstoff.

Des Weiteren wird die Erfindung anhand der folgenden Figur näher erläutert. Die Figur beschränkt dabei nicht den Schutzumfang der Erfindung, sondern dient nur der beispielhaften Erläuterung. Die Figur ist nicht maßstabsgetreu.

Es zeigt:
Figur 1 einen schematischen Querschnitt durch einen erfindungsgemäßen Fließbettgranulator.

Figur 1 zeigt einen schematischen Querschnitt durch einen erfindungsgemäßen Fließbettgranulator. Der erfindungsgemäße Fließbettgranulator umfasst mindestens einen Granulatorraum (1). Innerhalb des Granulatorraums (1) ist eine perforierte Plate (2) mit bevorzugt in oder auf der perforierten Platte (2) befindlichen Sprühdüsen (3) angeordnet. Die Sprühdüsen (3) sind mit Atomisierungsgaszuleitungen (4) und Schmelzezuführungsleitungen (10) verbunden, welche in der Figur 1 schematisch als eine Linie (4, 10) angedeutet sind. Der Fließbettgranulator umfasst weiterhin eine Fluidisierungsgaszuleitung (5). Über die Fluidisierunggaszuleitung (5) wird das Fluidisierungsmedium, bevorzugt Luft, zur Erzeugung des Fließbetts (17) eingebracht. Innerhalb des Fließbettes (17) sind bevorzugt Trennwehre (11) angebracht. Der Fließbettgranulator umfasst zudem eine Saatkeimzuführung (7), einen Granulatorauslauf (9) und Entlüftungsöffnung (8). Im Fließbettgranulator ist die perforierte Platte (2) angeordnet, welche eine organische Siliziumverbindungen enthaltende Beschichtung (6) aufweist. Die im Fließbett (17) auftretenden Strömungen und Verwirbelungen, welche mit einer dauerhaften Beaufschlagung oder "Beschuss" der perforierten Platte (2) durch Granulatpartikel (16) einhergehen, erzeugen große Kräfte auf die Oberfläche der perforierten Platte (2, 6). Überraschenderweise hat sich gezeigt, dass die organische Siliziumverbindungen enthaltende Beschichtung (6) der perforierten Platte (2) gegenüber den voranstehend beschriebenen Kräften beständig ist. Zudem hat sich überraschenderweise gezeigt, dass eine selektive Anbringung einer organische Siliziumverbindungen enthaltenden Beschichtung (6) der perforierten Platte (2) die oben beschriebenen Nachteile deutlich minimiert, ohne eine aufwändige und teure Beschichtung des gesamten Fließbettgranulatorraums (1) vornehmen zu müssen.

### Bezugszeichenliste:

- (1): Granulatorraum
- (2): perforierte Platte
- (3): Sprühdüsen
- (4): Atomisierungsgaszuleitungen
- (5): Fluidisierungsgaszuleitung
- (6): anti-haft Beschichtung, bevorzugt organische Siliziumverbindungen enthaltende Beschichtung
- (7): Saatkeimzuführung
- (8): Entlüftungsöffnung
- (9): Granulatorauslauf
- (10): Schmelzezuführungsleitungen
- (11): Trennwehre
- (16): Produkt/Granulatorpartikel
- (17): Fließbett

## Patentansprüche

1. Fließbettgranulator zur Granulierung harnstoffhaltiger Stoffe umfassend eine perforierte Platte (2) **dadurch gekennzeichnet, dass** die perforierte Platte (2) eine anti-haft Beschichtung (6) aufweist.

2. Fließbettgranulator nach Anspruch 1, **dadurch gekennzeichnet, dass** der Fließbettgranulator einen Granulatorraum (1), die in dem Granulatorraum (1) angeordnete perforierte Plate (2), in, auf oder getrennt von der perforierten Platte (2) angeordnete Sprühdüsen (3), mit den Sprühdüsen (3) verbundene Atomisierungsgaszuleitungen (4) und Schmelzezuführungsleitungen (10), eine Fluidisierungsgaszuleitung (5), Saatkeimzuführung (7), Granulatorauslauf (9) und Entlüftungsöffnung (8) umfasst.

3. Fließbettgranulator nach Anspruch 1 oder 2, **dadurch gekennzeichnet, dass** die anti-haft Beschichtung (6) organischen Siliziumverbindungen Polyalkylsiliziumverbindungen, Polyarylsiliziumverbindungen, Polyallylsiliziumverbindungen, Mischverbindung aus Alkyl-, Aryl- und Allylsiliziumverbindungen, sowie Gemische davon umfassen.

4. Fließbettgranulator nach Anspruch 3 , **dadurch gekennzeichnet, dass** die organischen Siliziumverbindungen, Polyalkylsiloxane, Polymethylsiloxane, Polydimethylsiloxane, Perflouralkylsilane oder Perflouralkylsiloxane, Polymethylphenylsiloxane und/oder Mischungen davon enthalten.

5. Fließbettgranulator nach Anspruch 4, **dadurch gekennzeichnet, dass** die organischen Siliziumverbindungen Polymethylsiloxane enthalten.

6. Fließbettgranulator nach mindestens einem der Ansprüche 1 bis 5, **dadurch gekennzeichnet, dass** die organische Siliziumverbindungen enthaltende Beschichtung (6) eine Schichtdicke von 0,5 µm bis 1000 µm, bevorzugt 15 µm bis 40 µm aufweist.

7. Fließbettgranulator nach mindestens einem der Ansprüche 1 bis 6, **dadurch gekennzeichnet, dass** die perforierte Platte (2) teilweise oder vollständig mit der anti-haft Beschichtung (6) beschichtet ist.

8. Fließbettgranulator nach mindestens einem der Ansprüche 1 bis 7, **dadurch gekennzeichnet, dass** die Entlüftungsöffnung (8) teilweise oder vollständig mit der anti-haft Beschichtung (6) beschichtet ist.

9. Fließbettgranulationsanlage zur Herstellung eines Düngergranulates mindestens umfassend:
- einen Fließbettgranulator
- ersten Fließbettkühler;
- Granulationsberförderungsmittel;
- Siebe und/oder Brecher und
- Produktkühler,
**dadurch gekennzeichnet, dass** der Fließbettgranulator einen Aufbau gemäß einen oder mehreren der Ansprüche 1 bis 8 aufweist.

10. Verwendung eines Fließbettgranulator nach mindestens einem der Ansprüche 1 bis 8 und/oder der Fließbettgranulationsanlage nach Anspruch 9 zur Herstellung eines harnstoffhaltigen und/oder harnstoff-/schwefelhaltigen Düngergranulats.

11. Verwendung des Fließbettgranulators und/oder der Fließbettgranulationsanlage nach Anspruch 10 zur Herstellung eines Düngergranulates welches Ammoniumverbindungen, Nitrate, Phosphate, Harnstoff, elementaren Schwefel, Ammoniumsulfat, UAS (Harnstoff-Ammoniumsulfat), und/oder Gemische davon enthält.
